(19) Europäisches Patentamt
European Patent Office
Office européen des brevets

(11) EP 4 383 641 A1

(12) EUROPEAN PATENT APPLICATION

(43) Date of publication:
12.06.2024 Bulletin 2024/24

(21) Application number: 23195089.0

(22) Date of filing: 04.09.2023

(51) International Patent Classification (IPC):
H04L 9/08 $^{(2006.01)}$

(52) Cooperative Patent Classification (CPC):
H04L 9/085

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.12.2022 JP 2022194747

(71) Applicant: Fujitsu Limited
Kawasaki-shi, Kanagawa 211-8588 (JP)

(72) Inventor: SAKAMAKI, Yoshiyuki
Kawasaki-shi, Kanagawa 211-8588 (JP)

(74) Representative: Hoffmann Eitle
Patent- und Rechtsanwälte PartmbB
Arabellastraße 30
81925 München (DE)

(54) PROGRAM, METHOD, AND INFORMATION PROCESSING DEVICE FOR CALCULATING SECRET SHARES

(57) A program comprising instructions which when executed by a computer, cause the computer to execute processing including: acquiring, in a case where a plurality of pieces of variance information that corresponds to a plurality of nodes is generated by encryption of secret information, an upper limit value allowable for mutual information between the secret information and each of the plurality of pieces of variance information; and calculating, based on the upper limit value, a value of a parameter that indicates a distribution width of random number values used for the encryption.

FIG. 1

**Description**

FIELD

The embodiments discussed herein are related to a program, a calculation method, and an information processing device.

BACKGROUND

Secure computation is known as a technology of computing data in an encrypted state. The secure computation is also referred to as confidential computation. With the secure computation, secret information that an individual, an organization, or the like does not desire to disclose may be used for data analysis or machine learning without being known to others. In secure computation, a method called secret sharing may be used in which the secret information of a client is encrypted and distributed, and stored on a server.

For example, there is a proposal of a secure computation device using Shamir's secret sharing method, in which a secret value s is distributed into n fragments (shares) by a random polynomial f, and further, the secret value s is reconstructed from optional k fragments. Note that n is an integer equal to or larger than 2, and k is an integer satisfying $n \geq k$. k is referred to as Shamir's threshold.

Note that, in a privacy protection technology of concealing individual data by probabilistic noise addition, there is a proposal of a noise addition device in which a noise value to be added to an input value is a bounded noise value that does not change a value range of the input value.

Furthermore, there is also a proposal for a method computing an element of a matrix product of two matrices using a secret sharing scheme without a trusted initializer.

Furthermore, there is also a proposal for a method that enables cooperatively to determine a model parameter of a data processing model while data privacy is protected by using the secret sharing for distributing data used to train the data processing model among parties.

Moreover, there is also a proposal for a method of making it difficult to leak a secret by changing a random number coefficient polynomial used for share computation for encrypting secret information from that of the method proposed by Shamir.

International Publication Pamphlet No. WO 2021/124520, Japanese Laid-open Patent Publication No. 2014-81545, U.S. Patent Application Publication No. 2020/0320605, U.S. Patent Application Publication No. 2021/0042640, Adi Shamir, "How to share a secret", Communications of the ACM, Volume 22 Issue 11, pp. 612-613, November 1979, and Katrine Tjell, Rafael Wisniewski, "Privacy in Distributed Computations based on Real Number Secret Sharing", [online], July 2021, arXiv:2107.00911[cs.CR] [retrieved on November 10, 2022], Internet <URL: https://arxiv.org/pdf/2107.00911.pdf> are disclosed as related art.

SUMMARY

TECHNICAL PROBLEM

In secret sharing, there is a problem that it is difficult to appropriately determine a parameter for generating random number values used for the encryption of secret information. For example, when the random number values are too small relative to the value of the secret information, the value of the secret information may be estimated by a single node from encrypted values of the secret information. On the other hand, when the random number values are too large, the encrypted value of the secret information becomes too large, so there is a possibility that the cancellation of significant digits occurs at the time of secure computation and a result of the secure computation may not be obtained correctly.

In one aspect, an object of an embodiment is to appropriately determine a parameter for generating random number values.

SOLUTION TO PROBLEM

According to an aspect of the embodiments, there is provided a program comprising instructions, when executed by a computer, cause the computer to execute processing including as follows: acquiring, in a case where a plurality of pieces of variance information that corresponds to a plurality of nodes is generated by encryption of secret information, an upper limit value allowable for mutual information between the secret information and each of the plurality of pieces of variance information; and calculating, based on the upper limit value, a value of a parameter that indicates a distribution width of random number values used for the encryption.

ADVANTAGEOUS EFFECTS OF INVENTION

In one aspect, it is possible to appropriately determine a parameter for generating random number values.

BRIEF DESCRIPTION OF DRAWINGS

FIG. 1 is a diagram for describing an information processing device of a first embodiment;
FIG. 2 is a diagram illustrating an example of an information processing system of a second embodiment;
FIG. 3 is a diagram illustrating a hardware example of a client device;
FIGs. 4A and 4B are diagrams illustrating an example of scrambling;
FIG. 5 is a diagram for describing an example of share computation;
FIG. 6 is a diagram illustrating a functional example of the client device;
FIG. 7 is a diagram illustrating a functional example of a server device;
FIG. 8 is a flowchart illustrating an example of noise parameter calculation processing;
FIG. 9 is a flowchart illustrating an example of secret-sharing processing;
FIG. 10 is a diagram illustrating an example of the secret sharing processing; and
FIG. 11 is a diagram illustrating an example of reference information for determining a guaranteed value.

DESCRIPTION OF EMBODIMENTS

Hereinafter, the present embodiments will be described with reference to the drawings.

[First Embodiment]

The first embodiment will be described.

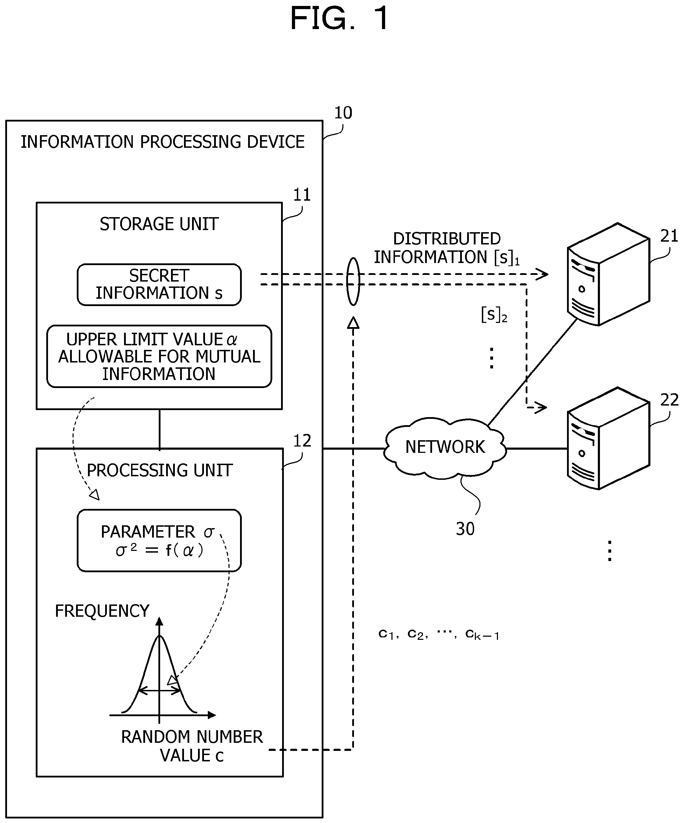

FIG. 1 is a diagram describing an information processing device of the first embodiment.
An information processing device 10 communicates with nodes 21, 22, ... via a network 30. The information processing device 10 may be called a computer. The nodes 21 and 22 may be called information processing devices or computers.
The information processing device 10 includes a storage unit 11 and a processing unit 12. The storage unit 11 may be a volatile storage device such as a random access memory (RAM), or may be a nonvolatile storage device such as a hard disk drive (HDD) or a flash memory. The processing unit 12 is, for example, a processor such as a central processing unit (CPU), a graphics processing unit (GPU), or a digital signal processor (DSP). The processing unit 12 may include an electronic circuit such as an application specific integrated circuit (ASIC) or a field programmable gate array (FPGA). The processor executes, for example, a program stored in a volatile semiconductor memory such as a random access memory (RAM). The program may be stored in nonvolatile storage, such as a hard disk drive (HDD) or a flash memory. A set of processors may be called a multiprocessor or simply "processors".
The processing unit 12 generates a plurality of pieces of variance information $[s]_1$, $[s]_2$, ... from secret information s based on a method of secret sharing of Shamir, and arranges the generated plurality of pieces of variance information $[s]_1$, $[s]_2$, ... in the nodes 21, 22, ... in a distributed manner. The secret information s is information that a user desires to keep secret. The secret information s is held in the storage unit 11 according to processing by the processing unit 12. The variance information for a j-th node is represented as $[s]_j$. j is an integer equal to or smaller than n. The variance information $[s]_j$ may be called a share. The processing unit 12 computes the variance information $[s]_j$ by Expression (1).
[Expression 1]

$$[s]_j = s + c_1 p_j + c_2 p_j^2 + \cdots + c_{k-1} p_j^{k-1} \qquad (1)$$

$p_j$ is a constant assigned to the j-th node. $c_1$, $c_2$, ..., $c_{k-1}$ are random number values to be multiplied by $p_j$, $p_j^2$, ..., $p_j^{k-1}$, respectively. As a probability distribution for generating the random number values, for example, a normal distribution is used. In this manner, the processing unit 12 generates the variance information $[s]_j$ by encrypting the secret information s by Expression (1) by using the random number values.
Although the variance information $[s]_1$, $[s]_2$, ... are arranged in the nodes 21, 22, ... in a distributed manner, the secret information s may not be restored unless k nodes are collected together. Specifically, a value of the secret information s may be obtained by solving a simultaneous linear expression with k unknowns in which a value of the

variance information $[s]_j$ and a value of the constant $p_j$ held by each of the k nodes are known values, and the value of the secret information s and $c_1$, $c_2$, ..., $c_{k-1}$ are unknown values.

Here, the processing unit 12 determines the random number values $c_1$, $c_2$, ..., $c_{k-1}$ of Expression (1) based on mutual information (may be referred to as "MI") of the secret information s and the variance information $[s]_j$. The mutual information is an index expressing an information amount between two random variables by the number of bits. The mutual information is also referred to as an information amount that depends on each other between two random variables or an information amount that affects each other between two random variables.

Information-theoretical magnitude of secret leakage due to the variance information $[s]_j$ is computed by mutual information $I(S;[S]_j)$ for a random variable S in a probability distribution of the secret information s and a random variable $[S]_j$ in a probability distribution of the variance information $[s]_j$ (an encrypted numerical value) to be transmitted to the node. Thus, by measuring the mutual information $I(S;[S];)$, a worst case of possible information leakage may be evaluated by the number of bits.

As an example, a case is considered where the secret information s takes any one value of {0, 1, 2, 3} with the same probability. In this case, it may be said that the secret information s has an information amount of four ways, in other words, 2 bits. It is assumed that the mutual information $I(S;[S]_j)$ = 1 bit. This indicates that in a situation where the variance information $[s]_j$ is known, 1 bit of information regarding the secret information s is obtained. In this case, in a worst case, there is a possibility that the node to which the variance information $[s]_j$ has been transmitted may estimate up to information corresponding to 1 bit (for example, the secret information s is any one of {0, 1}).

Thus, the processing unit 12 guarantees that information corresponding to an information amount exceeding a predetermined guaranteed value (the number of bits) is not estimated by setting the guaranteed value in advance as an allowable upper limit value for the mutual information. It may be said that the guaranteed value is a value indicating an information amount that causes no problem even when leakage occurs or an information amount that allows leakage. In the case of the example described above, when it is not desired to leak even 1 bit of information, it is sufficient that the guaranteed value is set to a value less than 1.0.

It is assumed that the secret information s is the random variable S, the share $[s]_j$ is the random variable $[S]_j$, and a random variable of $b(p_j)$ of Expression (2) is $B(p_j)$.
[Expression 2]

$$b(p_j) = c_1 p_j + c_2 p_j^2 + \cdots + c_{k-1} p_j^{k-1} \qquad (2)$$

In this case, the upper limit value of the mutual information $I(S;[S]_j)$ is computed by the following Expression (3).
[Expression 3]

$$
\begin{aligned}
I(S;[S]_j) &= h\big([S]_j\big) - h\big([S]_j|S\big) \\
&= h\big(S + B(p_j)\big) - h\big(S + B(p_j)|S\big) \\
&= h\big(S + B(p_j)\big) - h\big(B(p_j)\big) \\
&\leq \frac{1}{2} \log\Big(2\pi e\big(\sigma_S^2 + \sigma_{B(p_j)}^2\big)\Big) - \frac{1}{2}\log\big(2\pi e \sigma_{B(p_j)}^2\big) \\
&= \frac{1}{2}\log\left(1 + \frac{\sigma_s^2}{\sigma_{B(p_j)}^2}\right) \\
&= \frac{1}{2}\log\left(1 + \frac{\sigma_s^2}{\sum_{j'=1}^{k-1}\big(p_j^{j'}\sigma\big)^2}\right) = \alpha \qquad (3)
\end{aligned}
$$

In Expression (3), $h(\cdot)$ is an entropy function for a random variable, and $h(\cdot|\cdot)$ is a conditional entropy. A logarithm base of function log is 2. $\sigma_s$ is a standard deviation of the random variable S of the secret information s. $\sigma_s$ may be given in advance by a user or may be computed by the processing unit 12 from a value of past secret information accumulated in the storage unit 11. $\sigma_{B(p\_j)}$ is a standard deviation of the random variable $B(p_j)$ of $b(p_j)$. Here, $p\_j$ indicates a symbol with a suffix j added to the lower left of p in the mathematical expression. $\sigma$ is a standard deviation of $c_{j'}$ (j' = 1, 2, ..., k-1). a is the upper limit value allowable for the mutual information $I(S;[S]_j)$; in other words, called the guaranteed value.

The maximum entropy theorem is used for a relationship between a third line and a fourth line of Expression (3). Specifically, since the two random variables S and $B(p_j)$ are independent, a variance $V[S + B(p_j)]$ of $(S + B(p_j))$ is the sum of the respective variances. In other words, $V[S + B(p_j)] = V[S] + V[B(p_j)] = \sigma_s^2 + \sigma_{B(p\_j)}^2$. $V[S] = \sigma_s^2$ is a variance of the random variable S. $V[B(p_j)] = \sigma_{B(p\_j)}^2$ is a variance of the random variable $B(p_j)$. From the maximum entropy theorem, one having the variance $V[S + B(p_j)]$ and the maximum entropy is a normal distribution, and a value of the entropy may be written in the form of log (...)/2 in the fourth line. Therefore, inequality in the fourth line of Expression (3) is established.

According to Expression (3), $\sigma$, which is a parameter for generating the random number value $c_{j'}$ may be determined such that the mutual information $I(S;[S]_j)$ is equal to or smaller than the guaranteed value a. Specifically, the processing unit 12 receives specification of the guaranteed value a that causes no problem even when leakage occurs. Then, the processing unit 12 computes the maximum $\sigma$ for $p_j$ (j = 1, ..., n) allocated to the n nodes by using the guaranteed value a by Expression (4) in the form of $\sigma^2 = f(a)$ obtained by modifying Expression (3).

[Expression 4]

$$\sigma^2 = \max_{j=1,\ldots,n} \left\{ \frac{\sigma_s^2}{2^{2\alpha} - 1} \frac{1 - p_j^2}{p_j^2 \left( 1 - p_j^{2(k-1)} \right)} \right\} \qquad (4)$$

Note that, in the case of $p_j = 1$, the processing unit 12 sets a portion of a denominator "$p_j^2(1- p_j^{2(k-1)})$" of Expression (4) to 1/(k - 1). A max operator indicates the selection of a maximum value among a plurality of computation results (candidate values) corresponding to a plurality of values of $p_j$ in curly brackets $\{\cdot\}$. The right side of Expression (4) corresponds to f(a). The processing unit 12 may acquire $\sigma$ as a square root of $\sigma^2$.

The processing unit 12 uses $\sigma$ obtained by Expression (4) as a standard deviation $\sigma$ (or a variance $\sigma^2$) to generate the random number values $c_1, c_2, ..., c_{k-1}$ according to, for example, a normal distribution with an average value of 0, or the like. The processing unit 12 uses the generated random number values $c_1, c_2, ..., c_{k-1}$ to generate the n pieces of the variance information $[s]_1, [s]_2, ...$ to be arranged in the n nodes by Expression (1). Then, the processing unit 12 transmits the n pieces of variance information $[s]_1, [s]_2, ...$ to the nodes 21, 22, ..., respectively.

In this manner, according to the information processing device 10, in a case where a plurality of pieces of variance information corresponding to a plurality of nodes is generated by encrypting secret information, an upper limit value allowable for mutual information between the secret information and each of the plurality of pieces of variance information is acquired. Based on the upper limit value, a value of the parameter $\sigma$ indicating a distribution width of a random number value used for the encryption is calculated.

With this configuration, the information processing device 10 may appropriately determine the parameter $\sigma$ for generating random number values.

For example, the information processing device 10 may generate a random number value having an appropriate magnitude that satisfies a condition of theoretical guarantee of information leakage by the parameter $\sigma$. In other words, the information processing device 10 may suppress the random number value from becoming too small and may reduce the possibility that information corresponding to an information amount larger than a guaranteed value (upper limit value described above) leaks from variance information in a single node. Furthermore, the information processing device 10 may suppress the random number value from becoming too large and may make cancellation of significant digits less likely to occur in secure computation using variance information generated from the random number value. Furthermore, by suppressing the random number value from becoming too large, the information processing device 10 may also reduce a possibility that cancellation of significant digits occurs in a value of the variance information itself generated from the random number value. Moreover, the information processing device 10 may easily compute the parameter $\sigma$ for generating random number values and may reduce a computation cost associated with the generation of the variance information.

[Second Embodiment]

Next, a second embodiment will be described.

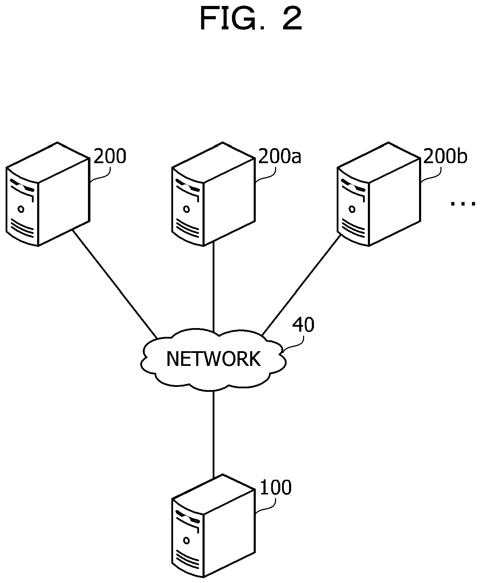

FIG. 2 is a diagram illustrating an example of an information processing system of the second embodiment.

The information processing system of the second embodiment includes a client device 100 and server devices 200, 200a, 200b, .... The client device 100 and the server devices 200, 200a, 200b, ... are coupled to a network 40. The network 40 is, for example, the Internet, a wide area network (WAN), a local area network (LAN), or the like.

The client device 100 is a computer that performs secret sharing of Shamir. The client device 100 encrypts secret information to generate a share to be arranged in each of the server devices 200, 200a, 200b, ... and transmit the generated share to the server device corresponding to the share.

The server devices 200, 200a, 200b, ... hold shares. The shares held by the server devices 200, 200a, 200b, ... are used for predetermined secure computation. With the secure computation, secret information is used for data analysis, machine learning, and the like while being encrypted.

Note that the information processing system of the second embodiment may include a plurality of client devices including the client device 100. Furthermore, the server devices 200, 200a, 200b, ... may be implemented by a physical computer (physical machine). The server devices 200, 200a, 200b, ... may be implemented by a virtual computer (virtual machine) implemented in a physical machine by using resources such as a processor and a RAM included in the physical machine.

The client device 100 is an example of the information processing device 10 of the first embodiment. The server devices 200, 200a, 200b, ... are examples of the nodes 21, 22, ... of the first embodiment.

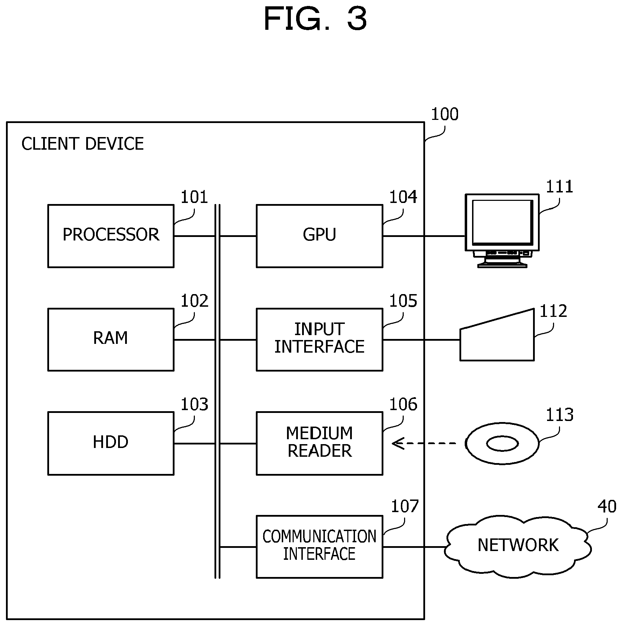

FIG. 3 is a diagram illustrating a hardware example of the client device.

The client device 100 includes a processor 101, a RAM 102, an HDD 103, a GPU 104, an input interface 105, a medium reader 106, and a communication interface 107. These units included in the client device 100 are coupled to a bus inside the client device 100. The processor 101 is an example of the processing unit 12 of the first embodiment. The RAM 102 or the HDD 103 is an example of the storage unit 11 of the first embodiment.

The processor 101 is an arithmetic device that executes a program command. The processor 101 is, for example, a CPU. The processor 101 loads at least a part of a program and data stored in the HDD 103 into the RAM 102, and executes the program. Note that the processor 101 may include a plurality of processor cores. Furthermore, the client device 100 may include a plurality of processors. Processing to be described below may be executed in parallel by using a plurality of processors or processor cores. Furthermore, a set of a plurality of processors may be referred to as a "multiprocessor" or simply "processors".

The RAM 102 is a volatile semiconductor memory that temporarily stores a program to be executed by the processor 101 and data to be used by the processor 101 for arithmetic operations. Note that the client device 100 may include a memory of a type other than the RAM, or may include a plurality of memories.

The HDD 103 is a nonvolatile storage device that stores software programs such as an operating system (OS), middleware, and application software, and data. Note that the client device 100 may include another type of the storage device such as a flash memory or a solid state drive (SSD), or may include a plurality of nonvolatile storage devices.

The GPU 104 outputs an image to a display 111 coupled to the client device 100 in accordance with a command from the processor 101. As the display 111, an optional type of display such as a cathode ray tube (CRT) display, a liquid crystal display (LCD), a plasma display, or an organic electro-luminescence (OEL) display may be used.

The input interface 105 acquires input signals from an input device 112 coupled to the client device 100, and outputs the acquired input signals to the processor 101. As the input device 112, a pointing device such as a mouse, a touch panel, a touch pad, or a trackball, a keyboard, a remote controller, a button switch, or the like may be used. Furthermore, a plurality of types of input devices may be coupled to the client device 100.

The medium reader 106 is a reading device that reads a program and data recorded in a recording medium 113. As the recording medium 113, for example, a magnetic disk, an optical disk, a magneto-optical (MO) disk, a semiconductor memory, or the like may be used. Examples of magnetic disks include a flexible disk (FD) and an HDD. Examples of optical disks include a compact disk (CD) and a digital versatile disk (DVD).

The medium reader 106 copies, for example, a program and data read from the recording medium 113 to another recording medium such as the RAM 102 or the HDD 103. The read program is executed by, for example, the processor 101. Note that the recording medium 113 may be a portable recording medium and is sometimes used for distribution of a program and data. Furthermore, the recording medium 113 and the HDD 103 may be referred to as computer-readable recording media.

The communication interface 107 is coupled to the network 40, and communicates with another information processing device via the network 40. The communication interface 107 may be a wired communication interface coupled to a wired communication device such as a switch or a router or may be a wireless communication interface coupled to a wireless communication device such as a base station or an access point.

The server devices 200, 200a, 200b, ... are also implemented by hardware similar to that of the client device 100.

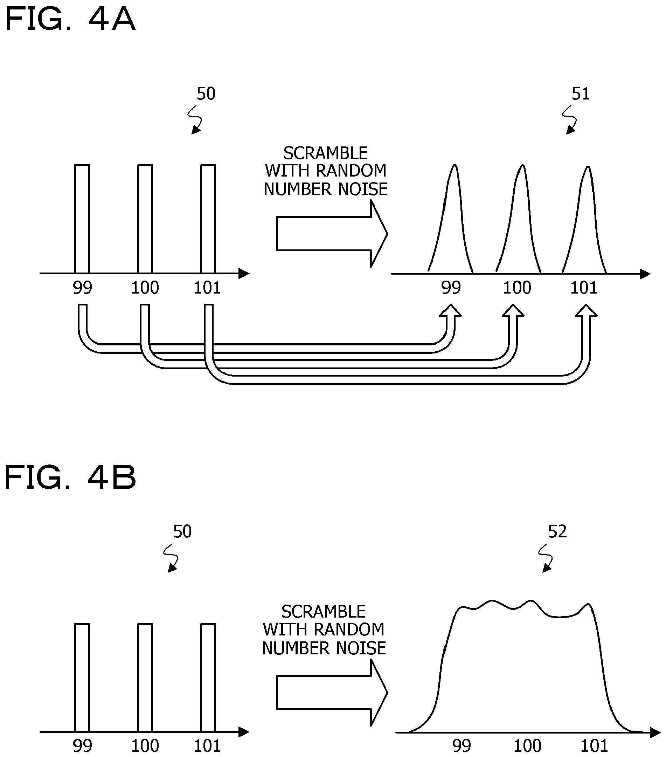

FIGs. 4A and 4B are diagrams illustrating an example of scrambling.

The client device 100 scrambles the secret information s with $c_{1p} + c_{2p}p_j^2 + ... + c_{k-1}p_j^{k-1}$ corresponding to random number noise and encrypts the secret information s as indicated by Expression (1).

In Shamir's secret sharing, the value obtained by scrambling a secret as a numerical value with random number noise (called share) is transmitted to each server device. However, when the random number noise is too small relative to the secret, a numerical value having almost no difference from the numerical value of the secret is transmitted to the server device.

FIG. 4A exemplifies a case where the random number noise is too small. A distribution 50 indicates an example of a distribution of values of a secret. A distribution 51 illustrates an example of a distribution of values of shares generated by scrambling the values of the secret having the distribution 50 with random number noise. For example, it is assumed that the secret s takes only any one value of {99, 100, 101}. At this time, for example, a value s + r1 scrambled with random number noise r1 in a range of -0.1 to 0.1 is any one value of {98.9 to 99.1, 99.9 to 100.1, 100.9 to 101.1} as indicated by the distribution 51. In this case, when share transmission is performed a plurality of times in a certain server device, the server device may know a certain pattern for a value of the share. As a result, the server device may estimate the secret.

FIG. 4B exemplifies a case where the random number noise is appropriate. A distribution 52 indicates a distribution of a value s + r2 scrambled with random number noise r2 in an appropriate range larger than the range of the random number noise r1. As indicated by the distribution 52, by scrambling the secret s with the appropriate random number noise r2, it becomes difficult for a side of the server device to specify a pattern of the value of the share, and it becomes difficult to estimate the secret s.

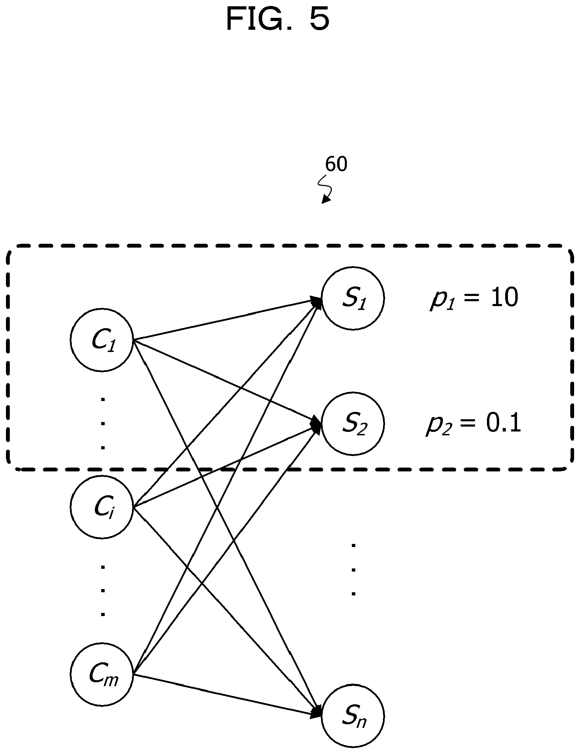

FIG. 5 is a diagram describing an example of share computation.

The graph 60 includes nodes indicating the respective client devices $C_1$, ..., $C_i$, ..., $C_m$ and the respective server devices $S_1$, $S_2$, ..., $S_n$, and oriented edges indicating server devices that are arrangement destinations of shares by the client devices. The client device $C_1$ corresponds to the client device 100. The server devices $S_1$, $S_2$, ..., $S_n$ correspond to the n server devices 200, 200a, .... The server device $S_j$ indicates a j-th server device among the server devices 200, 200a,...

As an example, it is assumed that the share $[s]_j$ of the secret s to the server device $S_j$ is $[s]_j = s + c_1 pj + c_2 p_j^2 \cdot c_1$ and $c_2$ are random number values according to a normal distribution $N(\mu, \sigma^2)$. $\mu$ is an average value. $\sigma$ is a standard deviation. Furthermore, it is assumed that the client device 100 ($C_1$) sets the server devices 200 and 200a ($S_1$, $S_2$) as the arrangement destinations of the shares.

When $p_1 = 10$, $[s]_1 = s + 10c_1 + 100c_2$.

When $p_2 = 0.1$, $[s]_2 = s + 0.1c_1 + 0.01c_2$.

It is assumed that the secret s of the client device 100 is s = 0 or 1.

(First Example)

When the standard deviation $\sigma$ is small, random number noise (= $c_1 pj + c_2 p_j^2$) becomes very small, and a server device may independently estimate the secret s.

For the normal distribution followed by the random number values, when $\mu = 0.0$ and $\sigma = 1.0$, 95% of generated random number values have values in a range of -2.0 to +2.0. Therefore, by receiving a share taking a value of $[s]_2 = -0.22$ to 0.22 or 0.78 to 1.22 a plurality of times, the server device 200a ($S_2$) may obtain a probability distribution of the share, leading to the estimation of the secret.

Note that, for s = 0 or 1, in the share $[s]_1$, since the secret s is buried with the random number noise, it becomes difficult for the server device 200 ($S_1$) to estimate the secret.

(Second Example)

When the standard deviation $\sigma$ is made too large so that random number noise does not become small relative to the server device 200a ($S_2$), while the secret s may be hidden by the random number noise in $[s]_2$, $[s]_1$ becomes too large, which leads to a risk of cancellation of significant digits in secure computation.

For the normal distribution followed by the random values, when $\mu = 0.0$ and $\sigma = 10000.0$, 95% of generated random number values have values in a range of -20000.0 to +20000.0. Therefore, values of $[s]_2 = -2200$ to +2200 (when s = 0) and -2199 to +2201 (when s = 1) are taken, and it becomes difficult for the server device 200a to estimate the secret s.

On the other hand, values of $[s]_1 = -2200000$ to +2200000 (when s = 0) and -2199999 to +2200001 (when s = 1) are taken. Such an extremely large value of the share results in the computation of a product of relatively large values in the computation of the product in secure computation, and thus, there is a possibility that a very large value is generated in the middle of the secure computation and cancellation of significant digits occurs. When the cancellation of significant digits occurs, a result of the secure computation may not be obtained correctly. Furthermore, since the power of p becomes a very large value as k increases, the value of the share itself becomes very large, and there is a possibility that the cancellation of significant digits occurs even with the single share.

Thus, the client device 100 provides a function of appropriately determining $\sigma$, which is a parameter for generating random number values $c_{j'}$ (j' = 1, ..., k-1) so that the random number noise has an appropriate magnitude.

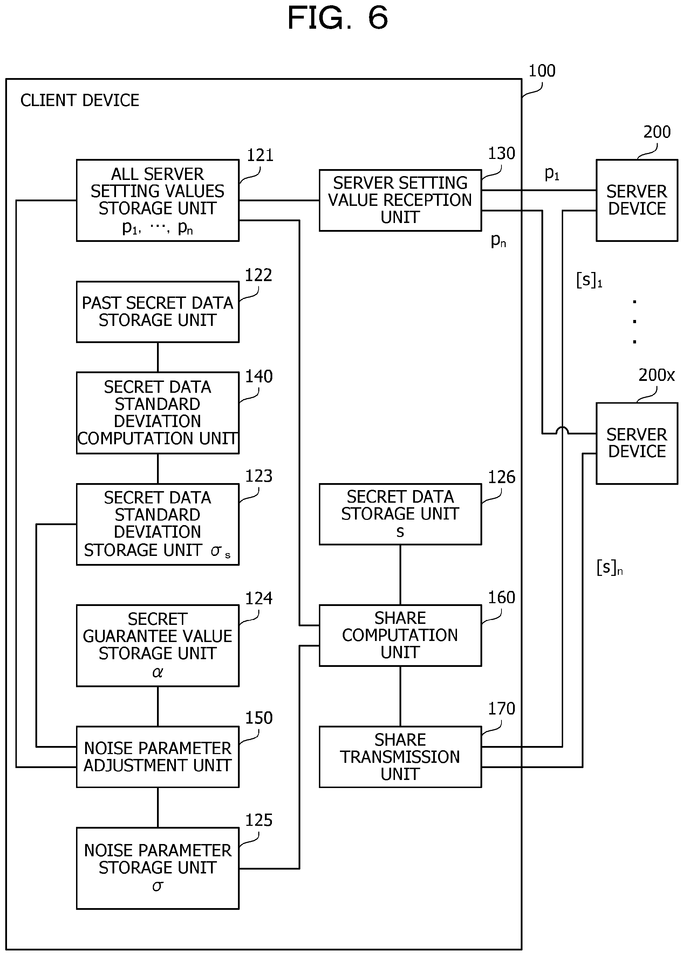

FIG. 6 is a diagram illustrating a functional example of the client device.

The client device 100 includes an all-server setting values storage unit 121, a past secret data storage unit 122, a secret data standard deviation storage unit 123, a secret guaranteed value storage unit 124, a noise parameter storage unit 125, a secret data storage unit 126, a server setting value reception unit 130, a secret data standard deviation computation unit 140, a noise parameter adjustment unit 150, a share computation unit 160, and a share transmission unit 170.

A storage area of the RAM 102 or the HDD 103 is used for the all-server setting values storage unit 121, the past secret data storage unit 122, the secret data standard deviation storage unit 123, the secret guaranteed value storage unit 124, the noise parameter storage unit 125, and the secret data storage unit 126. The server setting value reception unit 130, the secret data standard deviation computation unit 140, the noise parameter adjustment unit 150, the share computation unit 160, and the share transmission unit 170 are implemented by the processor 101 executing a program stored in the RAM 102.

The all-server setting values storage unit 121 stores server setting values $p_1, ..., p_n$ of the respective server devices 200, ..., 200x. Here, the server device 200x is an n-th server device.

The past secret data storage unit 122 stores the past secret data of a user. The past secret data corresponds to a secret created by the user up to a previous time. The past secret data may be all secrets up to the previous time or may be a secret within the most recent predetermined period.

The secret data standard deviation storage unit 123 stores a secret data standard deviation $\sigma_s$ computed from past secret data of a user.

The secret guaranteed value storage unit 124 stores a guaranteed value a. As the guaranteed value a, an information amount that causes no problem even when leakage occurs is set in advance by a user. For example, as described above, in a case where it is not desired to leak an information amount of even 1 bit, a is set to less than 1 bit (for example, a = 0.5 or the like).

The noise parameter storage unit 125 stores a noise parameter $\sigma$ computed by Expression (4) based on $p_1, ..., p_n, \sigma_s$, a. The noise parameter $\sigma$ indicates a distribution width of a noise value used for share computation.

The secret data storage unit 126 stores current secret data; in other words, the secret s.

The server setting value reception unit 130 receives the server setting values $p_1, ..., p_n$ from the server devices 200, ..., 200x, respectively, and stores the received server setting values $p_1, ..., p_n$ in the all-server setting values storage unit 121.

The secret data standard deviation computation unit 140 computes the secret data standard deviation $\sigma_s$ based on a value of past secret data stored in the past secret data storage unit 122, and stores the computed secret data standard deviation $\sigma_s$ in the secret data standard deviation storage unit 123.

The noise parameter adjustment unit 150 computes the noise parameter $\sigma$ by Expression (4) based on $p_1, ..., p_n$ stored in the all-server setting values storage unit 121, $\sigma_s$ stored in the secret data standard deviation storage unit 123, and a stored in the secret guaranteed value storage unit 124. A square root of $\sigma^2$ computed by Expression (4) is $\sigma$. Note that a value of k used in Expression (4) is given in advance to the noise parameter adjustment unit 150. The noise parameter adjustment unit 150 stores the computed $\sigma$ in the noise parameter storage unit 125.

Specifically, based on Expression (4), the noise parameter adjustment unit 150 calculates, for each of the plurality of server setting values, a plurality of candidate values of the noise parameter $\sigma$ corresponding to the plurality of server setting values so that mutual information ($I(S;[S];$) of Expression (3)) between the secret s and each share $[s]_j$ is equal to the guaranteed value a. One candidate value corresponds to a computation result for one $p_j$ in curly brackets $\{\cdot\}$ of the max operator of Expression (4). The noise parameter adjustment unit 150 selects a maximum value among the plurality of calculated candidate values as a value of the noise parameter $\sigma$ as indicated by the max operator of Expression (4).

The share computation unit 160 generates random number values $c_1, ..., c_{k-1}$ based on $\sigma$ stored in the noise parameter storage unit 125. The share computation unit 160 generates shares $[s]_1, ..., [s]_n$ by Expression (1) based on the generated random number values $c_1, ..., c_{k-1}, p_1, ..., p_n$ stored in the all-server setting values storage unit 121, and the secret s stored in the secret data storage unit 126.

The share transmission unit 170 transmits the shares $[s]_1, ..., [s]_n$ to the corresponding server devices 200, ..., 200x, respectively.

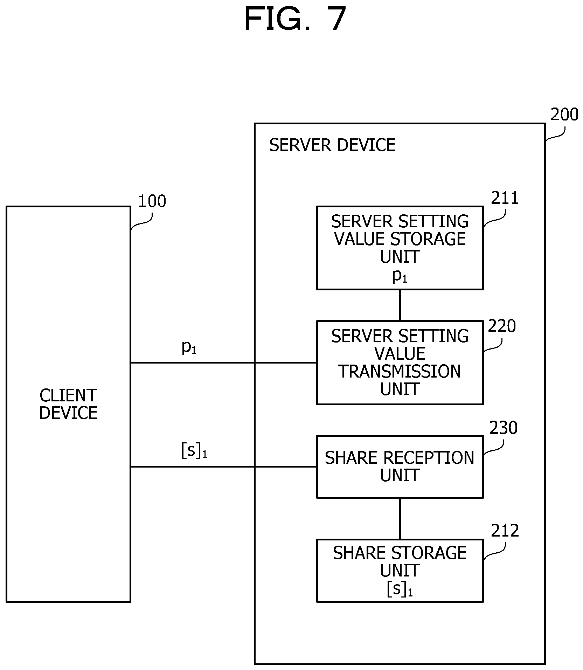

FIG. 7 is a diagram illustrating a functional example of the server device.

The server device 200 includes a server setting value storage unit 211, a share storage unit 212, a server setting value transmission unit 220, and a share reception unit 230. A storage area of the RAM or the HDD of the server device 200 is used for the server setting value storage unit 211 and the share storage unit 212. The server setting value transmission unit 220 and the share reception unit 230 are implemented by a processor of the server device 200 executing a program stored in the RAM.

Note that the server devices 200a, ..., 200x other than the server device 200 also have functions similar to those of the server device 200.

The server setting value storage unit 211 stores the server setting value $p_1$ corresponding to the server device 200. The server setting value $p_1$ is set in advance in the server setting value storage unit 211.

The share storage unit 212 stores the share $[s]_1$ corresponding to the server device 200.

The server setting value transmission unit 220 transmits the server setting value $p_1$ stored in the server setting value storage unit 211 to the client device 100.

The share reception unit 230 receives the share $[s]_1$ corresponding to the server device 200 from the client device 100, and stores the received share $[s]_1$ in the share storage unit 212.

Next, a processing procedure of the client device 100 will be described.

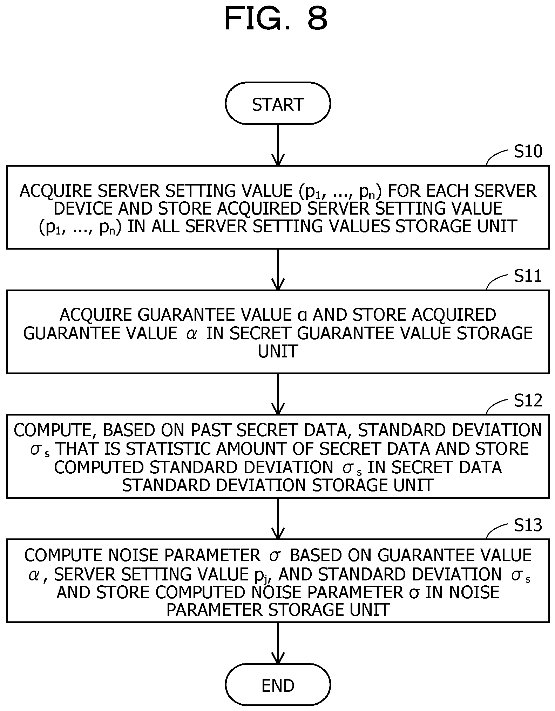

FIG. 8 is a flowchart illustrating an example of noise parameter calculation processing.

(S10) The server setting value reception unit 130 acquires a server setting value $(p_1, ..., p_n)$ for each server device, and stores the acquired server setting value $(p_1, ..., p_n)$ in the all-server setting values storage unit 121.

(S11) The noise parameter adjustment unit 150 acquires the guaranteed value a, and stores the acquired guaranteed value a in the secret guaranteed value storage unit 124. The guaranteed value a is specified in advance by a user.

(S12) The secret data standard deviation computation unit 140 computes, based on past secret data stored in the past secret data storage unit 122, the standard deviation $\sigma_s$ that is a statistical amount of the past secret data, in other words, the secret data standard deviation $\sigma_s$, and stores the computed secret data standard deviation $\sigma_s$ in the secret data standard deviation storage unit 123.

(S13) The noise parameter adjustment unit 150 computes the noise parameter $\sigma$ by using Expression (4) based on the guaranteed value a, the server setting value $p_j$ (j = 1, ..., n), and the standard deviation $\sigma_s$, and stores the computed noise parameter $\sigma$ in the noise parameter storage unit 125. The noise parameter adjustment unit 150 calculates candidate values of $\sigma$ (or $\sigma^2$) for each value of $p_j$ based on Expression (4), and selects a maximum value (or a square root of the maximum value) among the candidate values for each value of $p_j$ as a value of the noise parameter $\sigma$. Then, the noise parameter calculation processing ends.

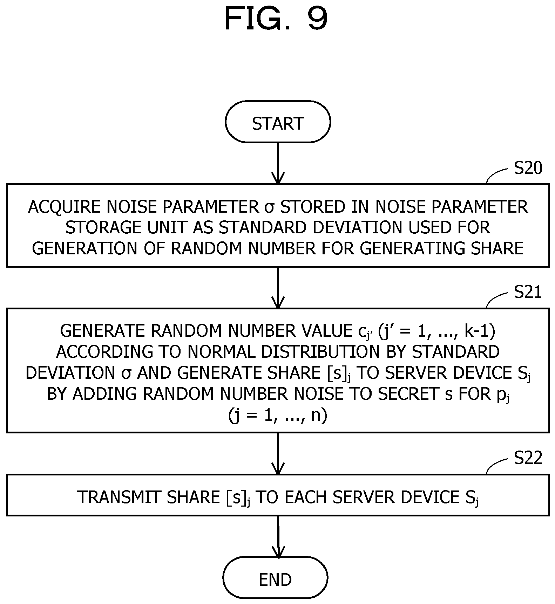

FIG. 9 is a flowchart illustrating an example of secret-sharing processing.

(S20) The share computation unit 160 acquires the noise parameter $\sigma$ stored in the noise parameter storage unit 125 as a standard deviation used for the generation of a random number for generating a share.

(S21) The share computation unit 160 generates the random number value $c_{j'}$ (j' = 1, ..., k-1) in accordance with a normal distribution by the standard deviation $\sigma$, and generates the share $[s]_j$ to the server device $S_j$ by adding random number noise to the secret s for $p_j$ (j = 1, ..., n) by Expression (1).

(S22) The share transmission unit 170 transmits the share $[s]_j$ to each server device $S_j$. Then, the secret-sharing processing ends. Note that the share reception unit 230 of each server device $S_j$ receives the share $[s]_j$ from the client device 100, and stores the received share $[s]_j$ in the share storage unit 212.

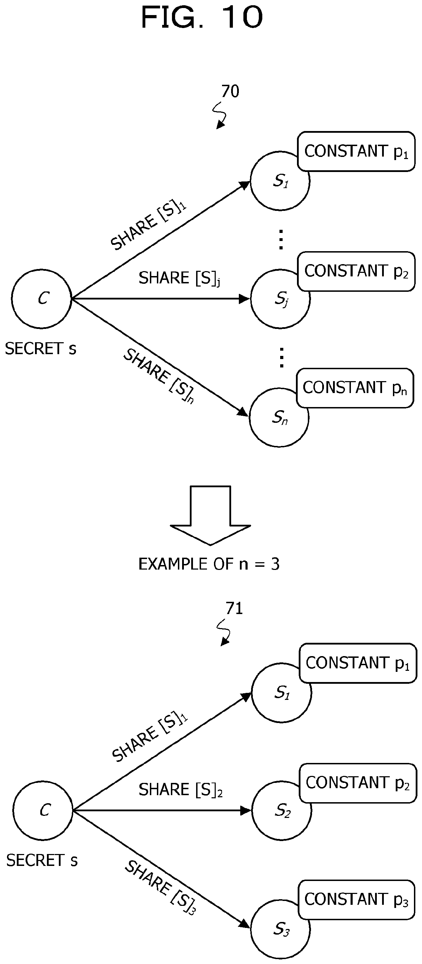

FIG. 10 is a diagram illustrating an example of secret-sharing processing.

In graph 70, node C indicates the client device 100, and nodes $S_1, ..., S_j, ..., S_n$ indicate the server devices 200, ..., 200x. A server setting value of a j-th (j = 1, ..., n) server device is a constant $p_j$. A share of the j-th server device for the secret s is $[s]_j$.

Here, a case where n = 3 is exemplified. For example, the nodes $S_1$, $S_2$, and $S_3$ correspond to the server devices 200, 200a, and 200b, respectively. Furthermore, it is assumed that the server setting value $p_1$ of the server device 200 is 10. It is assumed that the server setting value $p_2$ of the server device 200a is 0.1. It is assumed that the server setting value $p_3$ of the server device 200b is 1.0. The share transmitted to the server device 200 is $[s]_1$. The share transmitted to the server device 200a is $[s]_2$. The share transmitted to the server device 200b is $[s]s$.

It is assumed that the secret s of the client device 100 takes any one value of {0, 1, 2, 3} with the same probability. In this case, a variance $\sigma_s^2$ computed by a square of the secret data standard deviation $\sigma_s$ is $\sigma_s^2 = 5/4$.

Furthermore, it is assumed that the client device 100 sets the guaranteed value a = 0.5 so that each server device does not acquire an information amount equal to or larger than 1 bit.

For example, before the secret sharing processing, the client device 100 executes the noise parameter calculation processing as follows.

The server setting value reception unit 130 acquires server setting values $p_1$ = 10, $p_2$ = 0.1, and $p_3$ = 1.0 for the server devices 200, 200a, and 200b, respectively, and stores the acquired server setting values $p_1$ = 10, $p_2$ = 0.1, and $p_3$ = 1.0 in the all-server setting values storage unit 121.

The noise parameter adjustment unit 150 acquires the guaranteed value a = 0.5, and stores the acquired guaranteed value a = 0.5 in the secret guaranteed value storage unit 124. The guaranteed value a is specified in advance by a user. The noise parameter adjustment unit 150 may set the guaranteed value a = 0.5 in accordance with a reference set in advance based on, for example, a value range of values stored in the past secret data storage unit 122 or the secret data storage unit 126.

The noise parameter adjustment unit 150 computes $\sigma$ of Expression (4) by using the variance $\sigma_s^2$, the guaranteed

value a, and the server setting values $p_1$, $p_2$, and $p_3$. Specifically, the noise parameter adjustment unit 150 computes $\sigma^2$ by Expression (5) obtained by substituting each numerical value into Expression (4).

[Expression 5]

$$\sigma^2 = \max_{j=1,\dots,n}\left\{\frac{\sigma_s^2}{2^{2\alpha}-1}\frac{1-p_j^2}{p_j^2\left(1-p_j^{2(k-1)}\right)}\right\}$$

$$= \max_{j}\left\{\frac{5/4}{2^1-1}\frac{1-p_j^2}{p_j^2\left(1-p_j^4\right)}\right\}$$

$$= \max_{j}\left\{\frac{5}{4}\frac{1}{p_j^2+p_j^4}\right\}$$

$$= \max\{0.00124, 123.7624, 0.625\}$$

$$= 123.7624 \qquad\qquad (5)$$

The noise parameter adjustment unit 150 sets the standard deviation $\sigma$ = 11.12, which is a square root of the variance $\sigma^2$ = 123.7624, as the noise parameter. The noise parameter adjustment unit 150 stores the computed noise parameter $\sigma$ in the noise parameter storage unit 125.

Then, the client device 100 performs the secret sharing processing as follows.

The share computation unit 160 acquires the noise parameter $\sigma$ stored in the noise parameter storage unit 125 as a standard deviation used for the generation of a random number for generating a share.

The share computation unit 160 generates the random number value $c_{j'}$ (j' = 1, 2) in accordance with a normal distribution $N(0, \sigma^2)$. For example, it is assumed that $c_1$ = 13.1 and $c_2$ = -27.4.

In this case, the share computation unit 160 computes the shares $[s]_1$, $[s]_2$, and $[s]_3$ as in Expression (6) by using the random number values $c_1$ and $c_2$.

[Expression 6]

$$\begin{cases} [s]_1 = s + 10c_1 + 100c_2 = -2608.0 \\ [s]_2 = s + 0.1c_1 + 0.01c_2 = 2.036 \\ [s]_3 = s + c_1 + c_2 = -13.3 \end{cases} \qquad (6)$$

The share transmission unit 170 transmits the share $[s]_j$ to the server devices 200, 200a, and 200b ($S_j$, j = 1, 2, 3).

The share reception unit 230 of each of the server devices 200, 200a, and 200b receives the share $[s]_j$ from the client device 100, and stores the received share $[s]_j$ in the share storage unit 212.

According to the client device 100 of the second embodiment, by appropriately selecting random number noise used when a secret is encrypted, it is possible to reduce the possibility of occurrence of information leakage and to reduce the possibility of occurrence of a problem of cancellation of significant digits during share computation and cancellation of significant digits during secure computation.

Furthermore, in the method of Katrine Tjell, Rafael Wisniewski, "Privacy in Distributed Computations based on Real Number Secret Sharing", [online], July 2021, arXiv:2107.00911[cs.CR] [retrieved on November 10, 2022], Internet <URL: https://arxiv.org/pdf/2107.00911.pdf> described above, it is needed to compute a sum of products in the share computation, and a computation amount may be increased as compared with the method of Shamir of Adi Shamir, "How to share a secret", Communications of the ACM, Volume 22 Issue 11, pp. 612-613, November 1979. Specifically, in the method of Katrine Tjell, Rafael Wisniewski, "Privacy in Distributed Computations based on Real Number Secret Sharing", [online], July 2021, arXiv:2107.00911[cs.CR] [retrieved on November 10, 2022], Internet <URL: https://arxiv.org/pdf/2107.00911.pdf>, there is a problem that Lagrange basis polynomials are used to perform share computation and a computation cost for computing a sum of products of the polynomials is large.

On the other hand, according to the client device 100, a noise parameter is generated based on Expression (4), and a share is computed by Expression (1). Thus, the client device 100 may compute a share more easily compared with the case of using the complicated polynomials as in the method of Katrine Tjell, Rafael Wisniewski, "Privacy in Distributed Computations based on Real Number Secret Sharing", [online], July 2021, arXiv:2107.00911[cs.CR] [retrieved on November 10, 2022], Internet <URL: https://arxiv.org/pdf/2107.00911.pdf>, and the computation cost for performing the share computation may be reduced.

Note that, in the example described above, it is assumed that the noise parameter adjustment unit 150 computes the noise parameter $\sigma$ by using the guaranteed value a stored in advance in the secret guaranteed value storage unit 124. On the other hand, the secret guaranteed value storage unit 124 may hold in advance reference information indicating a reference (or a policy) for determining the guaranteed value a. In that case, the noise parameter adjustment unit 150 may determine the guaranteed value a based on the reference information stored in the secret guaranteed value storage unit 124.

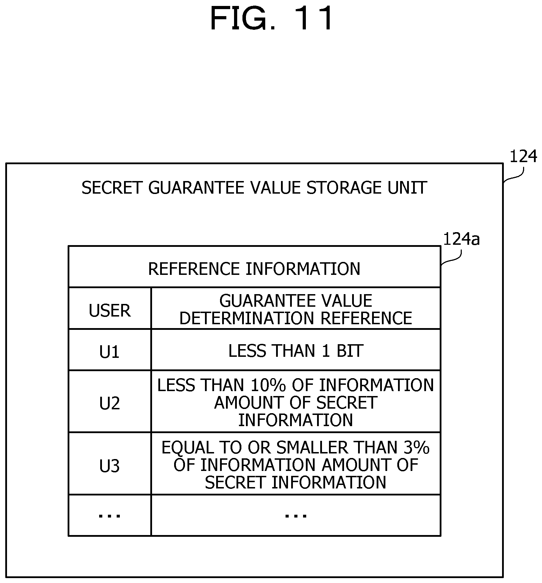

FIG. 11 is a diagram illustrating an example of the reference information for determining the guaranteed value.

Reference information 124a indicates a determination reference of the guaranteed value a for each user. The reference information 124a is stored in advance in, for example, the secret guaranteed value storage unit 124. The reference information 124a may be stored in a storage area other than the secret guaranteed value storage unit 124 in the RAM 102 or the HDD 103.

The reference information 124a includes items of a user and a guaranteed value determination reference. In the item of the user, identification information of a user who handles secret information is registered. In the item of the guaranteed value determination reference, a determination reference of a guaranteed value for the user is registered.

For example, the reference information 124a has a record of a guaranteed value determination reference "less than 1 bit" for a user "111". This record indicates that information leakage of even 1 bit is not allowed for secret information of the user U1. In this case, the noise parameter adjustment unit 150 sets a value of a < 1 to the secret information handled by the user U1, for example, as a = 0.5 described above. As a method of determining a (a = 0.5 in the example of the user U1), a method of using a value obtained by subtracting a predetermined value (for example, 0.5) from a limit value (1 (bit) in the example of the user U1) indicated in the guaranteed value determination reference, a method of using a value of a predetermined ratio (for example, 1/2) of the limit value, or the like is considered.

Furthermore, the reference information 124a has a record of a guaranteed value determination reference "less than 10% of an information amount of secret information" for a user "U2". This record indicates that there is no problem even when leakage occurs for secret information of the user U2 as long as an information amount is less than 10% of the information amount of the secret information. In this case, the noise parameter adjustment unit 150 sets a value of a < 0.1 $\times$ y (for example, a = 0.05 $\times$ y, or the like) to an information amount y of the secret information for the secret information handled by the user U2.

Furthermore, the reference information 124a has a record of a guaranteed value determination reference "equal to or smaller than 3% of an information amount of secret information" for a user "U3". This record indicates that there is no problem even when leakage occurs for secret information of the user U3 as long as an information amount is equal to or smaller than 3% of the information amount of the secret information. In this case, the noise parameter adjustment unit 150 sets a value of a $\leq$ 0.03 $\times$ z to an information amount z of the secret information for the secret information handled by the user U3. For example, the noise parameter adjustment unit 150 may determine a = 0.03 $\times$ z for the user U3.

In this manner, the client device 100 may also efficiently determine the guaranteed value a by the reference information 124a. For example, the client device 100 may appropriately determine the guaranteed value a according to an information amount of secret information in accordance with a policy for each user. Note that the guaranteed value determination reference is not limited to a user unit and may be set for another unit, such as a service unit provided by each server device or the like or a unit of a set of a user and a service.

As described above, the client device 100 performs, for example, the following processing.

In a case where a plurality of pieces of variance information corresponding to a plurality of nodes is generated by encrypting secret information, the processor 101 acquires an upper limit value allowable for mutual information between the secret information and each of the plurality of pieces of variance information. Based on the upper limit value, the processor 101 calculates a value of a parameter indicating a distribution width of a random number value used for the encryption of the secret information.

With this configuration, the client device 100 may appropriately determine a parameter for generating random number values. For example, the client device 100 may reduce the possibility of the occurrence of information leakage of an information amount exceeding the acquired upper limit value regarding the secret information and reduce the possibility of the occurrence of a problem of cancellation of significant digits during the computation of the variance information and cancellation of significant digits during secure computation. By suppressing the cancellation of significant digits in the process of the secure computation, a result of the secure computation may be obtained correctly. The share described above is an example of the variance information. The noise parameter $\sigma$ used as the standard deviation or $\sigma^2$ corresponding to the variance is an example of the parameter indicating the distribution width of the random number value. For example, the parameter indicating the distribution width of the random number value may be a value adjusted by adding a predetermined value to $\sigma$ computed by Expression (4), or the like. The server devices 200, 200a, ... are an example of the plurality of nodes.

Furthermore, based on a standard deviation of a value of past secret information, the processor 101 calculates a value of the parameter indicating the distribution width of the random number value.

With this configuration, the client device 100 may appropriately determine a parameter for generating random number values according to a tendency of the value of the secret information. The secret data standard deviation $\sigma_s$ corresponds to the standard deviation of the value of the past secret information.

Furthermore, the processor 101 calculates, for each of a plurality of node setting values corresponding to the plurality of nodes, a plurality of candidate values of the parameter described above corresponding to the plurality of node setting values such that mutual information between the secret information and each of the plurality of pieces of variance information becomes the acquired upper limit value. The processor 101 selects a maximum value among the plurality of calculated candidate values as the value of the parameter used for encryption.

With this configuration, the client device 100 may appropriately determine a parameter for generating random number values for the plurality of nodes. In other words, the client device 100 may reduce the possibility of the occurrence of information leakage in each of the plurality of nodes and reduce the possibility of the occurrence of a problem of cancellation of significant digits during computation of the variance information and cancellation of significant digits during secure computation. Note that the server setting value $p_j$ for each server device described above is an example of the node setting value.

Furthermore, the processor 101 generates a plurality of random number values by using the value of the parameter indicating the distribution width of the random number value and generates the plurality of pieces of variance information based on the secret information and the plurality of random number values.

With this configuration, the client device 100 may easily generate a plurality of pieces of variance information. For example, a computation cost for generating the plurality of pieces of variance information may be reduced as compared with the method of Katrine Tjell, Rafael Wisniewski, "Privacy in Distributed Computations based on Real Number Secret Sharing", [online], July 2021, arXiv:2107.00911[cs.CR] [retrieved on November 10, 2022], Internet <URL: https://arxiv.org/pdf/2107.00911.pdf> described above.

Furthermore, in acquiring the upper limit value allowable for the mutual information between the secret information and each of the plurality of pieces of variance information, the processor 101 may determine the upper limit value based on reference information indicating a reference of an information amount that causes no problem even when leakage occurs for the secret information.

With this configuration, the processor 101 may efficiently determine the upper limit value based on the reference information. The guaranteed value determination reference in the reference information 124a described above is an example of the reference of the information amount that causes no problem even when leakage occurs for the secret information.

Note that the information processing of the first embodiment may be implemented by causing the processing unit 12 to execute a program. Furthermore, the information processing of the second embodiment may be implemented by causing the processor 101 to execute the program. The program may be recorded in the computer-readable recording medium 113.

For example, the program may be distributed by distributing the recording medium 113 in which the program is recorded. Furthermore, the program may be stored on another computer and distributed through a network. For example, a computer may store (install), in a storage device such as the RAM 102 or the HDD 103, the program recorded in the recording medium 113 or received from another computer and read the program from the storage device to execute the program.

**Claims**

1. A program comprising instructions which, when executed by a computer, cause the computer to execute processing comprising:

    acquiring, in a case where a plurality of pieces of variance information that corresponds to a plurality of nodes is generated by encryption of secret information, an upper limit value allowable for mutual information between the secret information and each of the plurality of pieces of variance information; and
    calculating, based on the upper limit value, a value of a parameter that indicates a distribution width of a random number value used for the encryption.

2. The program according to claim 1, for causing the computer to execute processing comprising
    calculating, in the calculating, the value of the parameter based on a standard deviation of a value of past secret information.

3. The program according to claim 1, for causing the computer to execute processing comprising calculating, in the calculating, for each of a plurality of node setting values that corresponds to the plurality of nodes, a plurality of candidate values of the parameter that corresponds to the plurality of node setting values such that the mutual information becomes the upper limit value, and selecting a maximum value among the plurality of calculated candidate values as the value of the parameter used for the encryption.

4. The program according to claim 1, for causing the computer to execute processing comprising generating a plurality of random number values by using the value of the parameter, and generating the plurality of pieces of variance information based on the secret information and the plurality of random number values.

5. The program according to claim 1, for causing the computer to execute processing comprising determining, in the acquiring, the upper limit value based on reference information that indicates a reference of an information amount that is considered to cause no problem even when leakage occurs for the secret information.

6. The program according to claim 1, wherein the parameter is a standard deviation or a variance.

7. A calculation method implemented by a computer, the calculation method comprising:

    acquiring, in a case where a plurality of pieces of variance information that corresponds to a plurality of nodes is generated by encryption of secret information, an upper limit value allowable for mutual information between the secret information and each of the plurality of pieces of variance information; and
    calculating, based on the upper limit value, a value of a parameter that indicates a distribution width of a random number value used for the encryption.

8. An information processing device comprising:

    a storage unit that stores an upper limit value allowable for a mutual information between secret information and each of a plurality of pieces of variance information that is generated by encryption of the secret information and corresponds to a plurality of nodes; and
    a processing unit that calculates, based on the upper limit value, a value of a parameter that indicates a distribution width of a random number value used for the encryption.

# FIG. 1

INFORMATION PROCESSING DEVICE 10

STORAGE UNIT 11

SECRET INFORMATION s

UPPER LIMIT VALUE $\alpha$ ALLOWABLE FOR MUTUAL INFORMATION

PROCESSING UNIT 12

PARAMETER $\sigma$
$\sigma^2 = f(\alpha)$

FREQUENCY

RANDOM NUMBER VALUE c

DISTRIBUTED INFORMATION $[s]_1$

$[s]_2$

21

22

NETWORK 30

$c_1, c_2, \cdots, c_{k-1}$

# FIG. 2

200

200a

200b

. . .

40

NETWORK

100

# FIG. 3

CLIENT DEVICE 100

PROCESSOR 101

RAM 102

HDD 103

GPU 104 — 111

INPUT INTERFACE 105 — 112

MEDIUM READER 106 — 113

COMMUNICATION INTERFACE 107 — NETWORK 40

FIG. 4A

50

51

SCRAMBLE
WITH RANDOM
NUMBER NOISE

99    100    101

99    100    101

FIG. 4B

50

52

SCRAMBLE
WITH RANDOM
NUMBER NOISE

99    100    101

99    100    101

# FIG. 5

60

$p_1 = 10$

$p_2 = 0.1$

# FIG. 6

CLIENT DEVICE 100

ALL SERVER
SETTING VALUES
STORAGE UNIT
$p_1, \cdots, p_n$ 121

SERVER SETTING
VALUE RECEPTION
UNIT 130

$p_1$

SERVER
DEVICE 200

$p_n$

PAST SECRET DATA
STORAGE UNIT 122

$[s]_1$

SECRET DATA
STANDARD
DEVIATION
COMPUTATION UNIT 140

SERVER
DEVICE 200x

SECRET DATA
STANDARD
DEVIATION
STORAGE UNIT $\sigma_s$ 123

SECRET DATA
STORAGE UNIT
s 126

SECRET
GUARANTEE VALUE
STORAGE UNIT
$\alpha$ 124

SHARE
COMPUTATION
UNIT 160

$[s]_n$

NOISE PARAMETER
ADJUSTMENT UNIT 150

SHARE
TRANSMISSION
UNIT 170

NOISE PARAMETER
STORAGE UNIT
$\sigma$ 125

# FIG. 7

SERVER DEVICE 200

CLIENT DEVICE 100

SERVER SETTING VALUE STORAGE UNIT $p_1$ 211

SERVER SETTING VALUE TRANSMISSION UNIT 220

SHARE RECEPTION UNIT 230

SHARE STORAGE UNIT $[s]_1$ 212

$p_1$

$[s]_1$

# FIG. 8

START

S10

ACQUIRE SERVER SETTING VALUE $(p_1, ..., p_n)$ FOR EACH SERVER DEVICE AND STORE ACQUIRED SERVER SETTING VALUE $(p_1, ..., p_n)$ IN ALL SERVER SETTING VALUES STORAGE UNIT

S11

ACQUIRE GUARANTEE VALUE $\alpha$ AND STORE ACQUIRED GUARANTEE VALUE $\alpha$ IN SECRET GUARANTEE VALUE STORAGE UNIT

S12

COMPUTE, BASED ON PAST SECRET DATA, STANDARD DEVIATION $\sigma_s$ THAT IS STATISTIC AMOUNT OF SECRET DATA AND STORE COMPUTED STANDARD DEVIATION $\sigma_s$ IN SECRET DATA STANDARD DEVIATION STORAGE UNIT

S13

COMPUTE NOISE PARAMETER $\sigma$ BASED ON GUARANTEE VALUE $\alpha$, SERVER SETTING VALUE $p_j$, AND STANDARD DEVIATION $\sigma_s$ AND STORE COMPUTED NOISE PARAMETER $\sigma$ IN NOISE PARAMETER STORAGE UNIT

END

# FIG. 9

START

S20

ACQUIRE NOISE PARAMETER σ STORED IN NOISE PARAMETER STORAGE UNIT AS STANDARD DEVIATION USED FOR GENERATION OF RANDOM NUMBER FOR GENERATING SHARE

S21

GENERATE RANDOM NUMBER VALUE $c_{j'}$ $(j' = 1, ..., k\text{-}1)$ ACCORDING TO NORMAL DISTRIBUTION BY STANDARD DEVIATION σ AND GENERATE SHARE $[s]_j$ TO SERVER DEVICE $S_j$ BY ADDING RANDOM NUMBER NOISE TO SECRET s FOR $p_j$ $(j = 1, ..., n)$

S22

TRANSMIT SHARE $[s]_j$ TO EACH SERVER DEVICE $S_j$

END

# FIG. 10

70

SHARE [S]₁

SHARE [S]ⱼ

SHARE [S]ₙ

$C$

SECRET s

$S_1$

CONSTANT p₁

$S_j$

CONSTANT p₂

$S_n$

CONSTANT pₙ

EXAMPLE OF n = 3

71

SHARE [S]₁

SHARE [S]₂

SHARE [S]₃

$C$

SECRET s

$S_1$

CONSTANT p₁

$S_2$

CONSTANT p₂

$S_3$

CONSTANT p₃

# FIG. 11

SECRET GUARANTEE VALUE STORAGE UNIT 124

REFERENCE INFORMATION 124a

| USER | GUARANTEE VALUE DETERMINATION REFERENCE |
|------|------------------------------------------|
| U1 | LESS THAN 1 BIT |
| U2 | LESS THAN 10% OF INFORMATION AMOUNT OF SECRET INFORMATION |
| U3 | EQUAL TO OR SMALLER THAN 3% OF INFORMATION AMOUNT OF SECRET INFORMATION |
| ... | ... |

**EUROPEAN SEARCH REPORT**

Application Number

EP 23 19 5089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KATRINE TJELL ET AL: "Privacy in Distributed Computations based on Real Number Secret Sharing", ARXIV.ORG, CORNELL UNIVERSITY LIBRARY, 201 OLIN LIBRARY CORNELL UNIVERSITY ITHACA, NY 14853, 2 July 2021 (2021-07-02), XP091006584, * sections 3 and 4 * | 1-8 | INV. H04L9/08 |
| A | EP 3 676 985 B1 (INPHER INC [US]) 29 September 2021 (2021-09-29) * paragraph [0049] * | 1-8 | |

TECHNICAL FIELDS SEARCHED (IPC)

H04L

The present search report has been drawn up for all claims

| Place of search | Date of completion of the search | Examiner |
|---|---|---|
| Munich | 9 February 2024 | Billet, Olivier |

EPO FORM 1503 03.82 (P04C01)

## ANNEX TO THE EUROPEAN SEARCH REPORT
## ON EUROPEAN PATENT APPLICATION NO.

EP 23 19 5089

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2024

| Patent document cited in search report | | Publication date | Patent family member(s) | | Publication date |
|---|---|---|---|---|---|
| EP 3676985 | B1 | 29-09-2021 | CA | 3072638 A1 | 07-03-2019 |
| | | | CN | 111543025 A | 14-08-2020 |
| | | | EP | 3676985 A2 | 08-07-2020 |
| | | | IL | 272824 A | 30-04-2020 |
| | | | JP | 7272363 B2 | 12-05-2023 |
| | | | JP | 2020532771 A | 12-11-2020 |
| | | | KR | 20200044103 A | 28-04-2020 |
| | | | SG | 11202001591U A | 30-03-2020 |
| | | | US | 2020304293 A1 | 24-09-2020 |
| | | | US | 2020358601 A1 | 12-11-2020 |
| | | | US | 2021167948 A1 | 03-06-2021 |
| | | | WO | 2019046651 A2 | 07-03-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021124520 A
- JP 2014081545 A
- US 20200320605
- US 20210042640

**Non-patent literature cited in the description**

- **ADI SHAMIR.** How to share a secret. *Communications of the ACM,* November 1979, vol. 22 (11), 612-613
- **KATRINE TJELL ; RAFAEL WISNIEWSKI.** Privacy in Distributed Computations based on Real Number Secret Sharing. *arXiv:2107.00911[cs.CR,* July 2021, https://arxiv.org/pdf/2107.00911.pdf>
- **SHAMIR OF ADI SHAMIR.** How to share a secret. *Communications of the ACM,* vol. 22 (11), 612-613
- **KATRINE TJELL ; RAFAEL WISNIEWSKI.** Privacy in Distributed Computations based on Real Number Secret Sharing. *arXiv:2107.00911[cs.CR,* July 2021, https://arxiv.org/pdf/2107.00911.pdf